# EUROPÄISCHE PATENTSCHRIFT

(11) **EP 1 423 178 B1**
(45) Veröffentlichungstag und Bekanntmachung des Hinweises auf die Patenterteilung: **03.01.2007**
(21) Anmeldenummer: 03795720.6
(22) Anmeldetag: 18.07.2003
(51) Int. Cl.: B01D 29/66, B01D 35/12, B29C 47/68

(54) **VORRICHTUNG ZUM FILTRIEREN EINES FLUIDS, INSBESONDERE FÜR KUNSTSTOFFVERARBEITENDE ANLAGEN**
DEVICE FOR FILTERING A FLUID, ESPECIALLY FOR PLASTIC-PROCESSING INSTALLATIONS
DISPOSITIF POUR FILTRER UN FLUIDE, NOTAMMENT DANS DES INSTALLATIONS DE TRANSFORMATION DE MATIERES PLASTIQUES

(30) Priorität: 17.09.2002 DE 10242993; 20.11.2002 DE 10254022; 27.02.2003 DE 10308429; 15.04.2003 DE 10317170
(43) Veröffentlichungstag der Anmeldung: 02.06.2004
(60) Teilanmeldung: 04030092.3
(73) Patentinhaber: Kreyenborg Verwaltungen und Beteiligungen GmbH & Co. KG, D-48157 Münster (DE)
(72) Erfinder: MIDDLER, Robert, 48329 Havixbeck (DE); WÖSTMANN, Stefan, 48336 Füchtorf (DE)
(74) Vertreter: Habbel, Hans-Georg
(86) Internationale Anmeldenummer: PCT/DE2003/002418
(87) Internationale Veröffentlichungsnummer: WO 2004/026432

(56) Entgegenhaltungen:
- EP-A- 0 707 878
- EP-A- 0 798 098
- DE-C- 3 527 173
- US-A- 5 578 206

## Beschreibung

Die Erfindung bezieht sich auf eine Vorrichtung zum Filtrieren eines Fluids, insbesondere eines verflüssigten Kunststoffes gemäß dem Oberbegriff des Anspruches 1.

Im nachfolgenden wird der Begriff "Siebträger" in Verbindung mit dem Begriff "Sieb" bzw "Siebe" bzw. "Filterelement" benutzt, wobei darauf hinzuweisen ist, daß der Begriff "Sieb" bzw. "Filterelement" auch die verschiedenartigsten Siebe, Filter und andere Rückhalteeinrichtungen für Verschmutzungen betreffen kann.

Einrichtungen gemäß dem Oberbegriff des Hauptanspruches sind im Stand der Technik bekannt.

So werden in der DE 195 19 907 C2 und der EP 0 798 098 B1 eine Siebwechselvorrichtung für kunststoffverarbeitende Anlagen bzw. eine Vorrichtung zum Filtrieren eines Fluids beschrieben. Bei diesen bekannten Einrichtungen sind in einem Gehäuse ein Fluidzufuhrkanal und ein Fluidabfuhrkanal vorgesehen, wobei im Strömungsweg des zu filtrierenden Fluids und quer zu dessen Strömungsrichtung ein Siebträger verschiebbar ist, der entsprechende Filter trägt. Die Filter sind auf der Reinsiebseite hydraulisch miteinander verbunden. Außerdem sind im Gehäuse sogenannte Rückspülkanäle vorgesehen, die mit dem einen oder anderen Sieb so in Verbindung gebracht werden können, daß die auf der Anströmseite des Siebes abgelagerten Schmutzpartikel durch die Rückspülkanäle zur Atmosphäre abgeführt werden können.

In der US-PS 5 578 206 wird ebenfalls eine Vorrichtung zum Filtrieren eines verflüssigten Kunststoffes beschrieben, bei dem aber keine Rückspülmöglichkeiten für verschmutzte Siebe vorgesehen ist.

Schließlich ist aus der EP 0 707 878 bekannt, in einem Siebbolzen, dort Siebplatte genannt, mehrere Siebnester vorzusehen, die durch entsprechende Verschiebung des Siebbolzens nacheinander zum Einsatz kommen können, wobei gleichzeitig eine Rückspülmöglichkeit vorgesehen ist.

Gegenüber diesen bekannten Einrichtungen liegt der Erfindung die Aufgabe zugrunde, eine Anlage zu schaffen, bei der größtmöglichste Sieboberflächen bei kleinstmöglichen Siebträgerdurchmessern und Siebwechslergehäusen erreichbar sind. Weiterhin soll die Ausbildung der Kanäle in technisch einfachster Weise möglich sein und die Siebträgerlänge möglichst gering gehalten werden.

Diese der Erfindung zugrundeliegende Aufgabe wird durch die Lehre des Anspruches 1 gelöst.

Vorteilhafte Ausgestaltungen sind in den Unteransprüchen erläutert.

Mit anderen Worten ausgedrückt wird vorgeschlagen, daß der Zufuhrkanal sich in mindestens zwei Zufuhrteilkanäle aufteilt, die in der Produktionsstellung zu den eigentlichen Siebräumen führen. Nach Durchströmen der Siebe führen je Siebraum zwei Siebträgerteilkanäle zu zwei Gehäuseteilkanälen zu dem gegenüber dem Zufuhrkanal vorgesehenen Abfuhrkanal, wobei in der Wandung des Gehäuses die Zusammenführung dieser mindestens vier Gehäuseteilkanäle zum Abfuhrkanal erfolgt.

Bei einer solchen Einrichtung soll sowohl die Produktionsstellung realisiert werden, bei der beide Filterelemente mit Fluid durchströmt werden als auch der Siebträger so verfahrbar sein, daß ein Auswechseln der Filterelemente in der sogenannten Siebwechselstellung möglich ist.

Dadurch, daß bei der erfindungsgemäßen Einrichtung die Siebräume auf der Reinsiebseite nicht hydraulisch miteinander verbunden sind, ist beim Ausfahren des Siebträgers zum Zwecke des Siebwechsels eine wesentlich kürzere Strecke möglich, so daß gegenüber dem am nächsten kommenden Stand der Technik ein wesentlich kleinerer Siebträger und damit auch ein kleineres Gehäuse und damit auch kleinere hydraulische Einrichtungen ermöglicht werden. Auch der Energieaufwand zur konstanten Beheizung der Gesamtanordnung ist gegenüber dem St and der Technik verringert. Die Verschiebung des Siebträgers selbst erfordert aufgrund der geringeren Reibungsfläche weniger Kraft als bei einer Anordnung, in der der Siebträger relativ groß und lang gestaltet werden muß.

Dadurch, daß die von der Siebrückseite zum Abfuhrkanal führenden Siebträgerteilkanäle im Siebträger im wesentlichen geradlinig, d. h. also rechtwinklig zur Längsachse des Siebträgers ausgebildet sind, ist ein relativ kleiner Querschnitt des Siebträgers möglich, wobei die Zusammenführung dieser mindestens vier Gehäuseteilkanäle zum Abfuhrkanal im Gehäuse vorgenommen wird. Hier verlaufen dann diese Kanäle winklig zur Längsachse des Siebträgers zum Abfuhrkanal, und die Herstellung dieser winklig ausgestalteten Kanäle kann im Gehäuse wesentlich leichter und einfacher vorgenommen werden als im Siebträger selbst.

Bei einer bevorzugten Ausführungsform der erfindungsgemäßen Vorrichtung wird auch vorgesehen, daß der Zufuhrkanal und die Zusammenführung der Gehäuseteilkanäle zum Abfuhrkanal in an das Gehäuse anschließbaren Anschlußplatten erfolgt, wodurch wiederum die Gesamtvorrichtung relativ klein gehalten werden kann und die Bearbeitung und Herstellung dieser verschiedenen Kanäle vereinfacht wird.

Mit einer Vorrichtung der erfindungsgemäßen Art, bei der nur ein Siebträger vorgesehen ist, ist für die Produktionsstellung eine kontinuierliche Arbeit möglich, aber in der Siebwechselstellung muß die Produktion unterbrochen werden. Um dies zu vermeiden, wird gemäß einem weiteren Merkmal der Erfindung vorgeschlagen, daß mehrere Siebträger, also mindestens zwei Siebträger vorgesehen werden, wobei dann, wenn der eine Siebträger in die Stellung gefahren ist, in der die Siebe ausgewechselt werden, der andere Siebträger die Produktion gewährleistet.

Ein wesentliches Merkmal der erfindungsgemäßen Anordnung ist weiterhin darin zu sehen, daß durch Verschieben des Siebträgers ein Siebraum so eingestellt werden kann, daß keine Verbindung dieses Siebraumes mit dem Zufuhrkanal und dem Rückspülkanal besteht, wohl aber eine Verbindung dieses Siebraumes mit den Siebträgerteilkanälen und Gehäuseteilkanälen des anderen Siebraumes hergestellt werden kann. Durch diese Anordnung erfolgt eine Druckerhöhung in dem so gesperrten Siebraum von der Rückseite her, so daß der für das nachfolgend angestrebte Rückspülen dieses Siebraumes erforderliche Druck im Siebraum herrscht.

Schließlich wird gemäß der Erfindung vorgeschlagen, daß im Zufuhrkanal ein sogenannter Strömungsteiler angeordnet wird, der vor den beiden Siebräumen vorgesehen ist und der dadurch die Zufuhrteilkanäle bildet. Dieser Strömungsteiler bewirkt ein gutes Anströmen der Siebräume und verhindert gleichzeitig einen Verschleiß an dem Trennsteg in dem die beiden Siebe tragenden Bauteil des Siebträgers durch das anströmende Fluid.

Auch im Abfuhrkanal kann ein Strömungslenker vorgesehen sein, der zur Bildung der Gehäuseteilkanäle beiträgt und verhindert, daß im Bereich der Gehäuseteilkanäle und des Abfuhrkanales ein Totraum entsteht, der zum Vercracken des dort sich ggf. ablagernden Produktes führen könnte.

Ein Ausführungsbeispiel der erfindungsgemäßen Einrichtung wird nachfolgend anhand der Zeichnungen erläutert. Die Zeichnungen zeigen dabei in
- Fig. 1: eine Ausführungsform mit einem Siebträger innerhalb eines Gehäuses in der Produktionsstellung, in
- Fig. 2: die Anordnung gemäß Fig. 1 in der sogenannten Sperrstellung, in
- Fig. 3: die Anordnung gemäß Fig. 1 in der sogenannten Rückspülstellung für eines der beiden Siebe, in
- Fig. 4: die Anordnung gemäß Fig. 1 in der Sperrstellung für das andere Sieb, in
- Fig. 5: die Rückspülstellung der Anordnung gemäß Fig. 4, in
- Fig. 6: die Stellung des Siebträgers gemäß Fig. 1 in der sogenannten Siebwechselstellung, in
- Fig. 7: eine Schnittdarstellung der Vorrichtung gemäß Fig. 1 in Richtung der Längsachse des Siebträgers gesehen, in
- Fig. 8: eine Schnittdarstellung gemäß Fig. 7 mit zwei über- oder nebeneinander angeordneten Siebträgern, in
- Fig. 9: eine Schnittdarstellung gemäß Fig. 7 bei drei über- oder nebeneinander angeordneten Siebträgern, wobei die Gehäuseteilkanäle und die Zufuhrteilkanäle in gesonderten Anschlußplatten vorgesehen sind.

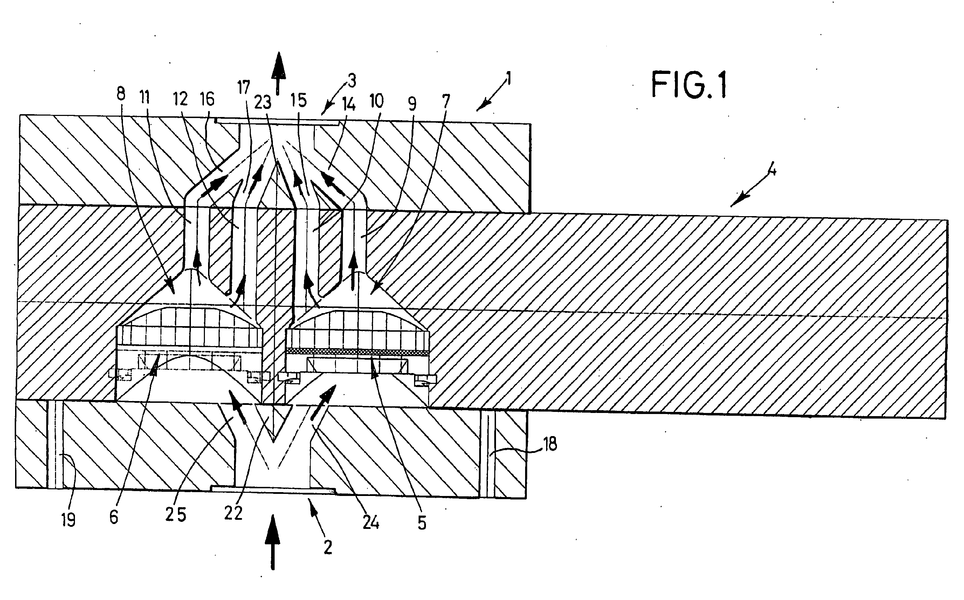

In Fig. 1 ist mit 1 ein Gehäuse bezeichnet, das einen Zufuhrkanal 2 und einen Abfuhrkanal 3 aufweist. Innerhalb des Gehäuses 1 ist über in der Zeichnung nicht dargestellte, aber zum Stand der Technik gehörende, vorzugsweise hydraulische Mittel ein Siebträger 4 verschiebbar angeordnet. In in dem Siebträger 4 ausgebildeten Siebräumen 7 und 8 sind Siebe 5 und 6 in an sich bekannter Weise angeordnet, wobei auch die Siebe 5 und 6, wie schon bereits ausgeführt, ebenfalls bekannt sind und grundsätzlich aus Einrichtungen bestehen, die in der Lage sind, als Rückhalteeinrichtungen für Verschmutzungen zu dienen.

Der Zufuhrkanal 2 ist durch Einbau eines Strömungsteilers 22 in Zufuhrteilkanäle 24 und 25 aufgeteilt, die die Zuführung des Fluids zu den Siebräumen 7 und 8 ermöglichen.

An der stromabwärtigen Seite der Siebe 5 und 6 münden in die Siebräume 7 und 8 Siebträgerteilkanäle 9 und 10 für den Siebraum 7 und Siebträgerteilkanäle 11 und 12 für den Siebraum 8.

Diese Siebträgerteilkanäle 9, 10; 11, 12 führen bei der Ausführungsform gemäß Fig. 1 zu im Gehäuse 1 angeordneten Gehäuseteilkanälen 14 bzw. 15 für den Siebraum 7 oder zu den Gehäuseteilkanälen 16, 17 für den Siebraum 8.

Diese Gehäuseteilkanäle 14, 15; 16, 17 münden in den Abfuhrkanal 3, aus dem das durch die Siebe 5, 6 gefilterte bzw. gereinigte Fluid austreten kann.

Im Abfuhrkanal 3 ist ein Strömungslenker 23 ausgebildet, der sicherstellt, daß im Abfuhrkanal 23 kein Totraum entsteht, in dem sich gefiltertes Fluid ablagern und damit vercracken kann.

Weiterhin sind im Gehäuse 1 bei der dargestellten Ausführungsform auf der Seite des Zufuhrkanales 2 zwei Rückspülkanäle 18 und 19 vorgesehen, die - wie nachfolgend noch zu erläutern sein wird - mit den Siebräumen 7, 8 auf der Anströmseite der in diesen Siebräumen 7, 8 angeordneten Siebe 5, 6 in Verbindung bringbar sind, wobei die Vorrichtung auch ohne die Rückspülmöglichkeit einsetzbar ist.

Die vorstehend erläuterte Fig. 1 der Vorrichtung zeigt die sogenannte Produktionsstellung, d .h. das zu filternde Fluid wird über den Zufuhrkanal 2, die Zufuhrteilkanäle 24 und 25 zur Anströmseite der Siebe 5 und 6 geführt, hier von Verunreinigungen gereinigt und tritt über die Siebträgerteilkanäle 9, 10; 11, 12 in die diesen Kanälen zugeordneten, im Gehäuse 1 ausgebildeten Gehäuseteilkanälen 14, 15 bzw. 16, 17 ein und wird von dort zum Abfuhrkanal 3 geführt.

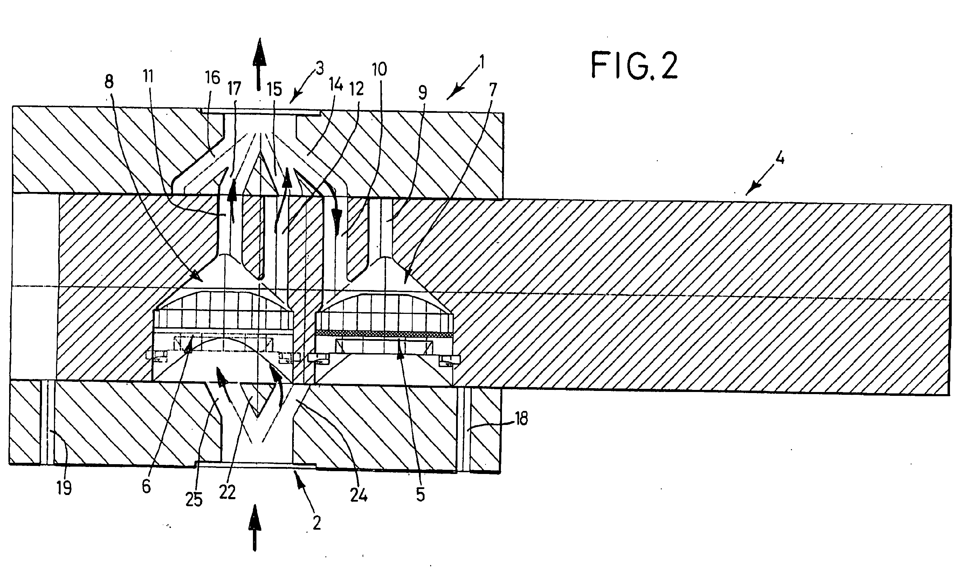

Soll eine Rückspülung des Siebes 5 erfolgen, wird gemäß Fig. 2 der Siebträger 4 so nach rechts verschoben, daß der anströmseitige Siebraum des Siebes 5 gesperrt ist, d. h. weder mit dem Zufuhrteilkanal 24 noch mit dem Rückspülkanal 18 Verbindung hat. Die abströmseitige Seite des Siebes 5 hat aber über den Siebträgerteilkanal 10 Verbindung mit dem Gehäuseteilkanal 14, und somit wird der Siebraum 7 über diese Verbindung unter Druck gesetzt.

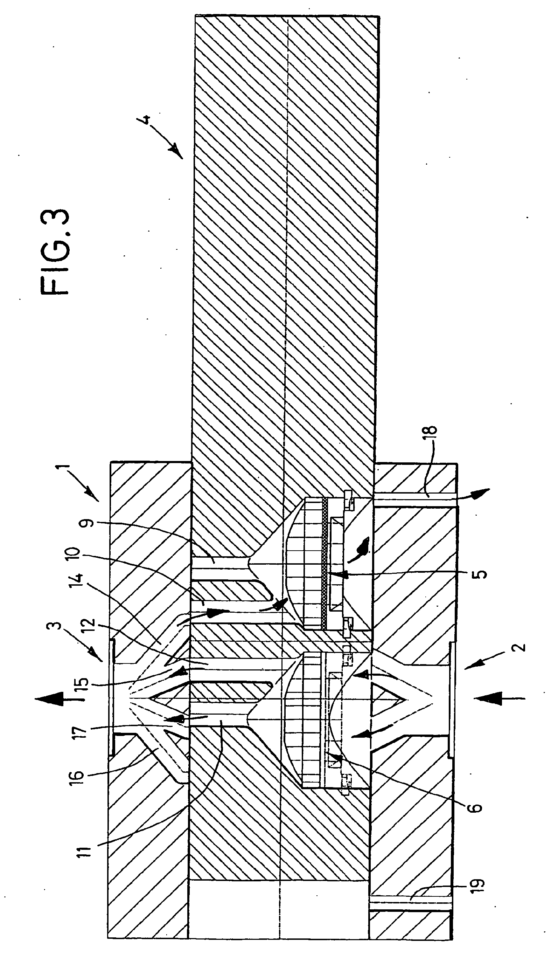

Wird nunmehr, wie in Fig. 3 dargestellt, durch Verschieben des Siebträgers 4 nach rechts eine Verbindung des Siebraumes 7 mit dem Rückspülkanal 18 hergestellt, kann ein einwandfreies Rückspülen dieses Siebes 5 durchgeführt werden, während gleichzeitig die Produktion durch die Zuführung des Fluids über den Zufuhrkanal 2 über das Sieb 6 zum Abfuhrkanal 3 aufrechterhalten werden kann.

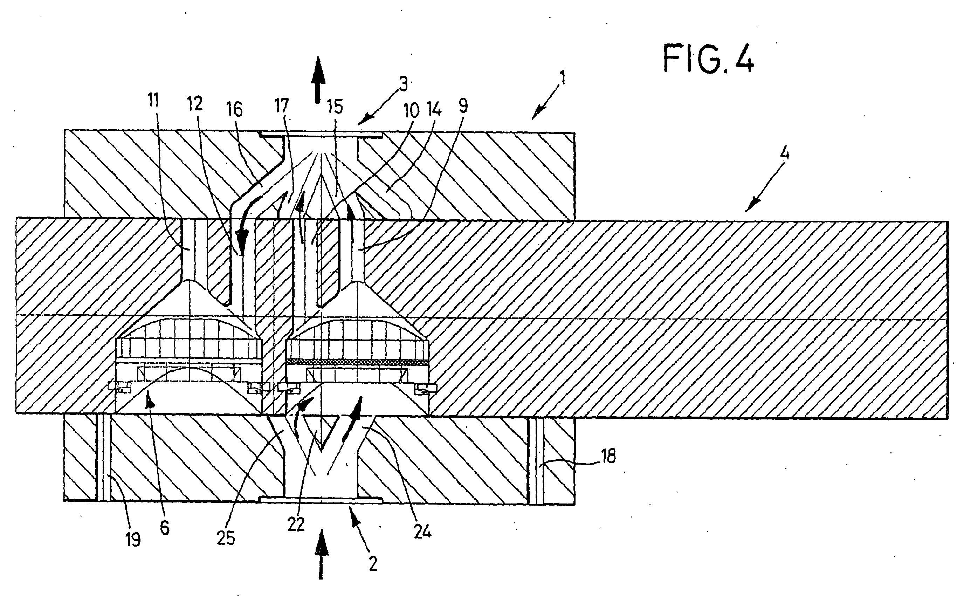

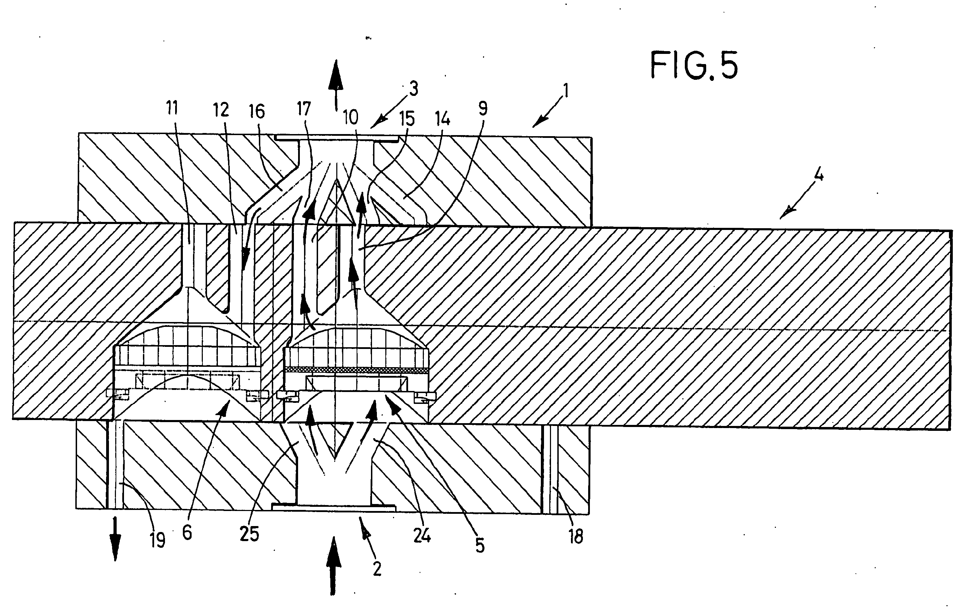

Fig. 4 zeigt die in Fig. 2 für das Sieb 5 dargestellte Sperrstellung nunmehr für das Sieb 6, wobei in Fig. 5 entsprechend der Darstellung in Fig. 3 die-Produktionsstellung für das Sieb 5 und die Rückspülstellung für das Sieb 6 dargestellt ist.

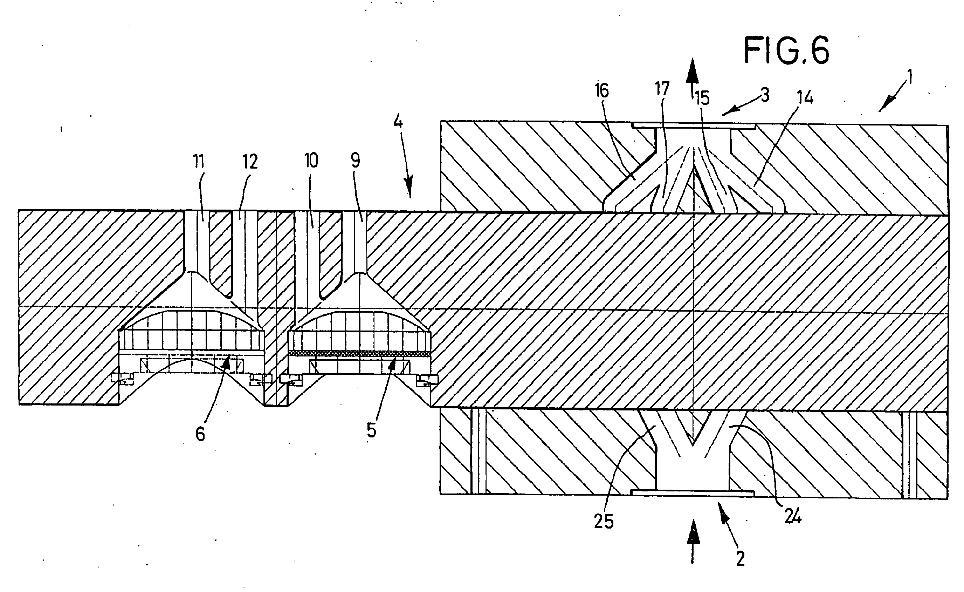

Bei der Darstellung gemäß Fig. 6 ist der Siebträger 4 so weit nach links aus dem Gehäuse 1 verschoben, daß nunmehr ein Auswechseln der Siebe 5 und 6 problemlos möglich ist.

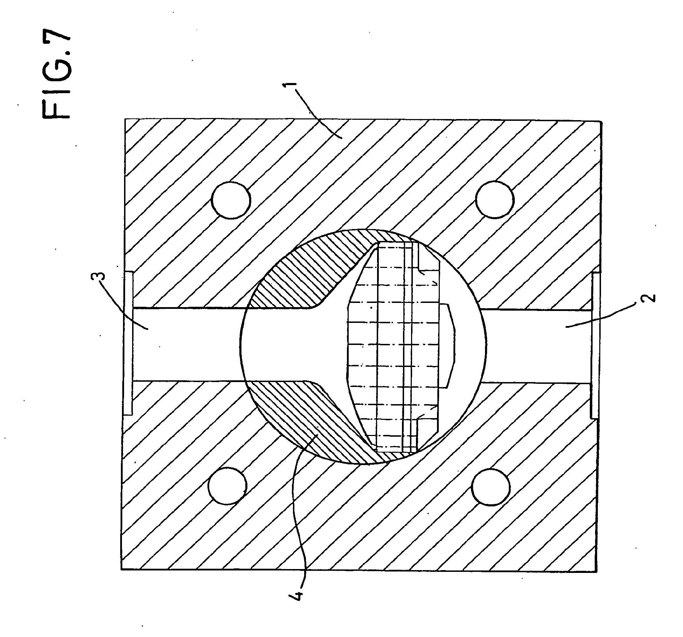

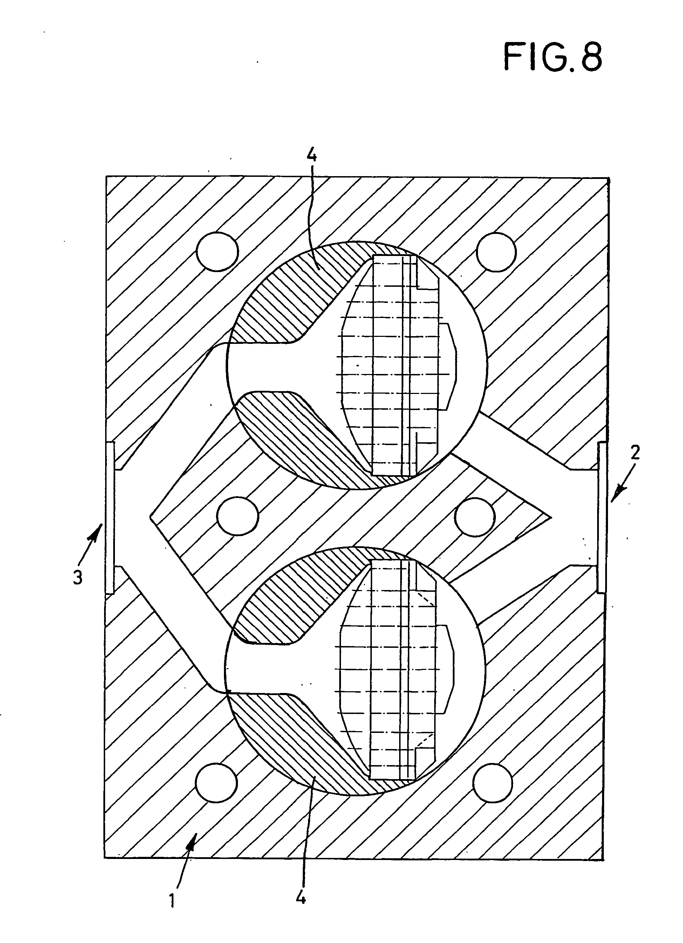

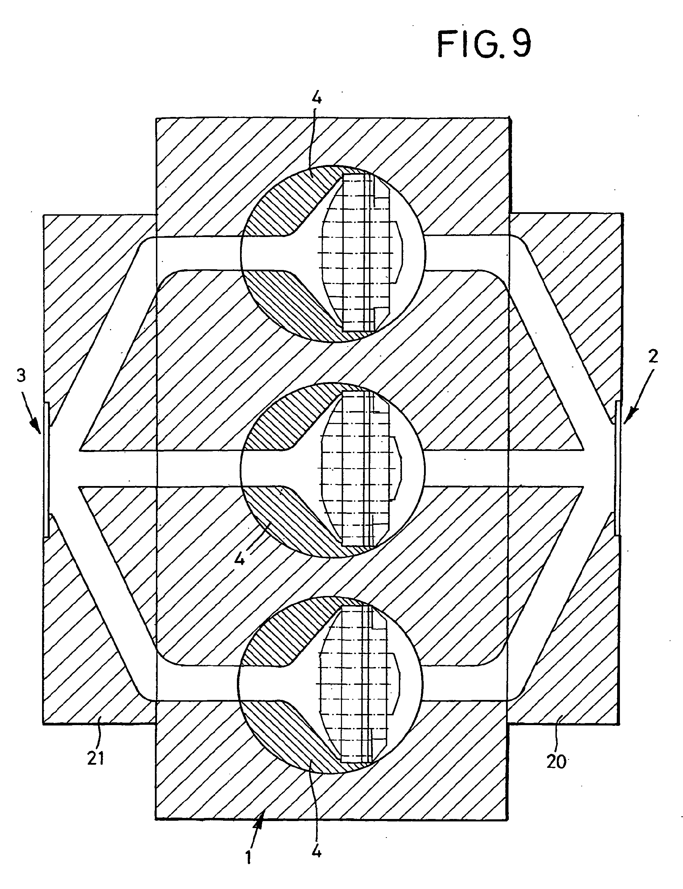

Die Fig. 7 zeigt die Anordnung eines Siebträgers 4 entsprechend den Fig. 1 bis 6 in einem Gehäuse 1 und die Fig. 8 und 9 verdeutlichen, daß es möglich ist, mehrere Siebträger 4 in einem Gehäuse anzuordnen, so daß eine kontinuierliche Produktion möglich ist, auch dann, wenn in einem der Siebträger 4 die zugeordneten Siebe ausgewechselt werden. Hierbei zeigt Fig. 9, daß es möglich ist, den Zufuhrkanal 2 und den Abfuhrkanal 3 mit den diesen Kanälen 2 und 3 zugeordneten Zufuhrteilkanälen und Gehäuseteilkanälen in Anschlußplatten 20 und 21 auszubilden, die an das eigentliche Gehäuse 1 anschließbar sind.

Bei der kontinuierlichen Ausführung mit mehreren Siebträgern ist die Sperrung des Rückspülkanales mit geeigneten Sperrmitteln notwendig, um beim Verfahren des Siebträgers in die Siebwechselstellung ein Austreten des Massestromes zu verhindern.

### BEZUGSZEICHENLISTE

- 1.: Gehäuse
- 2: Zufuhrkanal
- 3: Abfuhrkanal
- 4: Siebträger
- 5: Sieb
- 6: Sieb
- 7: Siebraum
- 8: Siebraum
- 9: Siebträgerteilkanal
- 10: Siebträgerteilkanal
- 11: Siebträgerteilkanal
- 12: Siebträgerteilkanal
- 14: Gehäuseteilkanal
- 15: Gehäuseteilkanal
- 16: Gehäuseteilkanal
- 17: Gehäuseteilkanal
- 18: Rückspülkanal
- 19: Rückspülkanal
- 20: Anschlußplatte
- 21: Anschlußplatte
- 22: Strömungsteiler
- 23: Strömungsteiler
- 24: Zufuhrteilkanal
- 25: Zufuhrteilkanal

## Patentansprüche

1. Vorrichtung zum Filtrieren eines Fluids, insbesondere eines verflüssigten Kunststoffes mit einem Gehäuse (1) mit mindestens einem Zufuhrkanal (2), einem Abfuhrkanal (3) und zwei auf der Seite des Zufuhrkanales (2) vorgesehenen Rückspülkanäle (18, 19), wobei im Strömungsweg des Fluids in einem quer zur Strömungsrichtung verschieblich gelagerten Siebträger (4) mindestens zwei Filterelemente (5, 6) in entsprechenden Siebräumen (7, 8) angeordnet und mit dem Zufuhrkanal (2) und dem Abfuhrkanal (3) in Verbindung bringbar sind, und die Rückspülkanäle (18, 19) mit den Siebräumen (7, 8) auf der Anströmseite der in diesen Filterelementen (5, 6) in Verbindung bringbar sind,
**dadurch gekennzeichnet,**
a) **daß** der Zufuhrkanal (2) in zwei Zufuhrteilkanäle (24, 25) aufgeteilt ist,
b) **daß** jeder Siebraum (7, 8) zwei im Siebträger (4) ausgearbeitete Siebträgerteilkanäle (9, 10; 11, 12) aufweist, die vom Siebraum (7, 8) zum Abfuhrkanal (3) hin gerichtet sind,
c) der Abfuhrkanal (3) vier Gehäuseteilkanäle (14, 15; 16, 17) aufweist, die zum Abfuhrkanal (3) zusammenlaufen,
d) die Siebträgerteilkanäle (9, 10; 11, 12) mit den Gehäuseteilkanälen (14, 15; 16, 17) durch Verschieben des Siebträgers (4) miteinander zur Führung des Fluids verbindbar sind und
e) durch Verschieben des Siebträgers (4) ein Siebraum (7 oder 8) so eingestellt werden kann, daß keine Verbindung dieses Siebraumes mit dem Zufuhrkanal (2) und dem Rückspülkanal (18 oder 19) besteht, wohl aber eine Verbindung dieses Siebraumes (7 oder 8) mit den Siebträgerteilkanälen (11, 12) oder (9, 10) des anderen Siebraumes und den Gehäuseteilkanälen (14, 15, 16, 17).

2. Vorrichtung nach Anspruch 1, **dadurch gekennzeichnet, daß** der Siebträger so verschoben werden kann, daß beide Filterelemente (5, 6) aus ihren Siebräumen (7, 8) entnommen werden können.

3. Vorrichtung nach Anspruch 1 oder 2, **dadurch gekennzeichnet, daß** mehrere Siebträger (4) in einem Gehäuse (1) übereinander oder nebeneinander angeordnet sind.

4. Vorrichtung nach Anspruch 1, **dadurch gekennzeichnet, daß** der Siebträger (4) so verschoben werden kann, daß ein Siebraum eine Verbindung zwischen dem Zufuhrkanal (2) und zwei Siebträgerteilkanälen und zwei Gehäuseteilkanälen und dem Abfuhrkanal (3) herstellt, während der andere Siebraum eine Verbindung zwischen einem Siebträgerteilkanal des einen Siebraumes, einem Gehäuseteilkanal und einem Rückspülkanal herstellt.

5. Vorrichtung nach einem oder mehreren der vorhergehenden Ansprüche, **dadurch gekennzeichnet, daß** der Zufuhrkanal (2) mit den Zufuhrkanälen (24, 25) und die Zusammenführung der Gehäuseteilkanäle (14, 15; 16, 17) zum Abfuhrkanal (3) in an das Gehäuse (1) anschließbaren Anschlußplatten (20, 21) erfolgt.

6. Vorrichtung nach einem oder mehreren der vorhergehenden Ansprüche, **dadurch gekennzeichnet, daß** im Zufuhrkanal (2) ein Strömungsteiler (22) vor den beiden Siebräumen (7, 8) angeordnet ist.

7. Vorrichtung nach einem oder mehreren der vorhergehenden Ansprüche, **dadurch gekennzeichnet, daß** im Abfuhrkanal (3) ein Strömungslenker (23) angeordnet ist.

## Claims

1. Device for filtering a fluid, in particular a liquefied plastic, with a housing (1) with at least one entry channel (2) one exit channel (3) and two reversible-flow channels (18, 19) provided on the side of the entry channel (2), where at least two filter elements (5, 6) in a filter carrier (4) mounted movably in the flow path of the fluid at right angles to the direction of flow, are arranged in corresponding filter compartments (7, 8) and can be brought into connection with the entry channel (2) and the exit channel (3), and the reversible-flow channels (18, 19) can be brought into connection with the filter compartments (7, 8) on the forward-flow side of the filter elements (5, 6),
**characterised in**
a) **that** the entry channel (2) is divided into two entry-channel-sections (24, 25),
b) **that** each filter compartment (7, 8) has two filter-carrier channel-sections (9, 10; 11, 12) elaborated in the filter carrier (4) which are aligned from the filter compartment (7, 8) towards the exit channel (3),
c) **that** the exit channel (3) has four housing channel-sections (14, 15; 16, 17) which converge towards the exit channel (3),
d) **that** the filter-carrier channel-sections (9, 10; 11, 12) can be connected with the housing channel-sections (14, 15; 16, 17) by shifting the filter carrier (4) in order to conduct the fluid, and
e) **that** by shifting the filter carrier (4) a filter compartment (7 or 8) can be adjusted in such a way that there is no connection between this filter compartment and the entry channel (2) and the reversible-flow channel (18 or 19), but a connection between this filter compartment (7 or 8) and the filter-carrier channel-sections (11, 12) or (9, 10) of the other filter compartment and the housing channel-sections (14, 15; 16, 17).

2. Device according to claim 1, **characterised in that** the filter carrier can be shifted in such a way that both filter elements (5, 6) can be removed from their filter compartments (7, 8).

3. Device according to claim 1 or 2, **characterised in that** several filter carriers (4) are located above or adjacent to one another in one housing.

4. Device according to claim 1, **characterised in that** the filter carrier (4) can be shifted in such a way that a filter compartment creates a connection between the entry channel (2) and two filter-carrier channel-sections and two housing channel-sections and the exit channel (3), while the other filter compartment creates a connection between a filter-carrier channel-section of one filter compartment, a housing channel-section and a reversible-flow channel.

5. Device according to one or several of the above claims, **characterised in that** the entry channel (2) with the entry-channel-sections (24, 25) and the junction of the housing channel-sections (14, 15; 16, 17) with the exit channel (3) takes place in connection plates (20, 21) which can be connected to the housing (1).

6. Device according to one or several of the above claims, **characterised in that** a flow divider (22) is located in the entry channel (2) before the two filter compartments (7, 8).

7. Device according to one or several of the above claims, **characterised in that** a flow guide (23) is located in the exit channel (3).

## Revendications

1. Dispositif servant à filtrer un fluide, notamment une matière plastique liquéfiée, avec un carter (1) comportant au moins un conduit d'amenée (2), un conduit d'évacuation (3) et deux conduits de rinçage en sens inverse (18, 19) prévus sur le côté du conduit d'amenée (2), sachant que sur le trajet du flux de fluide, dans un porte-crible (4) monté sur palier lui permettant de coulisser transversalement à la direction du flux, au moins deux éléments filtrants (5, 6) se trouvent dans des chambres de criblage (7, 8) correspondantes et peuvent être amenés en liaison avec le conduit d'amenée (2) et le conduit d'évacuation (3), et sachant que les conduits de rinçage en sens inverse (18, 19) peuvent être mis en liaison avec les chambres de criblage (7, 8) sur le côté afflux de ces éléments filtrants (5, 6),
**caractérisé en ce que**
a) le conduit d'amenée (2) se subdivise en deux sous-conduits (24, 25),
b) chaque chambre de criblage (7, 8) présente deux sous-conduits (9, 10 ; 11, 12) usinés dans le porte-crible (4), ces sous-conduits étant orientés de la chambre de criblage (7, 8) vers le conduit d'évacuation (3),
c) le conduit d'évacuation (3) présente quatre sous-conduits (14, 15 ; 16, 17) en carter, qui confluent vers le conduit d'évacuation (3),
d) les sous-conduits du porte porte-crible (9, 10 ; 11, 12) peuvent être mis en liaison avec les sous-conduits (14, 15 ; 16, 17) en carter, pour guider le fluide, en faisant coulisser le porte-crible (4), et
e) en faisant coulisser le porte-crible (4), on peut ajuster une chambre de criblage (7 ou 8) de telle sorte qu'il n'y ait pas de liaison de cette chambre de criblage avec le conduit d'amenée (2) et le conduit de rinçage en sens inverse (18 ou 19), mais qu'il y en ait une par contre entre cette chambre de criblage (7 ou 8) et les sous-conduits de porte-crible (11, 12) ou (9, 10) de l'autre chambre de criblage et les sous-conduits (14, 15, 16, 17) du carter.

2. Dispositif selon la revendication 1, **caractérisé en ce que** le porte-crible coulisse de telle manière qu'il est possible d'extraire les deux éléments filtrants (5, 6) hors de leurs chambres de criblage (7, 8).

3. Dispositif selon la revendication 1 ou 2, **caractérisé en ce que** plusieurs porte-cribles (4) sont superposés ou juxtaposés dans un carter (1).

4. Dispositif selon la revendication 1, **caractérisé en ce que** le porte-crible (4) se laisse coulisser de telle sorte qu'une chambre de criblage établit une liaison entre le conduit d'amenée (2) et deux sous-conduits de porte-crible et deux sous-conduits de carter et le conduit d'évacuation (3), sachant que l'autre chambre de criblage établit une liaison entre un sous-conduit du porte-crible d'une chambre de criblage, un sous-conduit de carter et un conduit de rinçage en sens inverse.

5. Dispositif selon l'une ou plusieurs des revendications précédentes, **caractérisé en ce que** le conduit d'amenée (2) avec les sous-conduits d'amenée (24, 25) et la confluence des sous-conduits de carter (14, 15 ; 16, 17) vers le conduit d'évacuation (3) a/ont lieu dans les plaques de raccordement (20, 21) connectables au carter (1)

6. Dispositif selon l'une ou plusieurs des revendications précédentes, **caractérisé en ce que** dans le conduit d'amenée (2) un diviseur de flux (22) est agencé en amont des deux chambres de criblage (7, 8).

7. Dispositif selon l'une ou plusieurs des revendications précédentes, **caractérisé en ce que** dans le conduit d'évacuation (3) est agencé un dispositif guide-flux (23).
